(19) Europäisches Patentamt
European Patent Office
Office européen des brevets

(11) **EP 2 187 031 B1**

(12) **FASCICULE DE BREVET EUROPEEN**

(45) Date de publication et mention
de la délivrance du brevet:
**04.04.2012 Bulletin 2012/14**

(51) Int Cl.:
***F02K 9/58*** *(2006.01)*   ***F02K 9/56*** *(2006.01)*

(21) Numéro de dépôt: **09173875.7**

(22) Date de dépôt: **23.10.2009**

(54) **Dispositif d'ajustement d'une variable de fonctionnement d'un moteur de fusée**

Regelungseinrichtung für eine Funktionsvariable eines Raketenmotors

Control system for a process factor of a rocket engine

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **13.11.2008 FR 0857684**

(43) Date de publication de la demande:
**19.05.2010 Bulletin 2010/20**

(73) Titulaire: **SNECMA
75015 Paris (FR)**

(72) Inventeurs:
• **Le Gonidec, Serge
27200 Vernon (FR)**

• **Faye, Olivier
27120 Menilles (FR)**

(74) Mandataire: **Delumeau, François Guy et al
Cabinet Beau de Loménie
158, rue de l'Université
75340 Paris Cedex 07 (FR)**

(56) Documents cités:
**EP-A- 1 967 723    GB-A- 2 172 860
US-A- 3 373 769    US-A- 4 618 931
US-A- 4 991 393    US-A- 5 148 674
US-A- 5 850 993**

**Description**

Arrière-plan de l'invention

L'invention se situe dans le domaine de la régulation d'un moteur.

Elle s'applique de façon privilégiée mais non limitative au contrôle d'un moteur de fusée.

D'une façon générale, les moteurs régulés répondent à des consignes extérieures, la loi de régulation ajustant les ordres des vannes qui tendent à conduire et maintenir le moteur au point de fonctionnement conforme aux consignes.

Par exemple, dans le cas d'un moteur de fusée, une consigne croissante de poussée appliquée à la régulation a pour effet de corriger la position des vannes pour augmenter la variable représentative de la pression dans la chambre de combustion du moteur.

Dans l'état actuel de la technique, l'asservissement des actionneurs, par exemple des vannes, impose une électronique coûteuse, ces actionneurs nécessitant des vitesses d'actionnement importantes pour effectuer un contrôle efficace avec un transitoire extrêmement court.

De ce fait, les actionneurs de vanne sont usuellement à haute bande passante et à forte puissance électrique, ce qui impose un contrôle permanent de leur position par rapport à la consigne et donc une électronique de pilotage dédiée à cette boucle d'asservissement locale coûteux en électronique et en énergie de commande.

La présente invention propose de répondre à ce problème en utilisant des actionneurs lents commandés en mode bang-bang n'imposant pas d'électronique complexe. On rappelle qu'une commande en mode bang-bang est une commande tout ou rien.

Le document US 4,991,393 décrit une méthode de contrôle d'une fusée comportant deux moteurs, les moteurs étant accélérés respectivement au dessus et au dessous d'une valeur nominale en réponse à un signal représentant une différence entre la mesure d'un angle et sa consigne.

Objet et résumé de l'invention

D'une façon générale, la présente invention propose un mécanisme de régulation d'un moteur, utilisant des actionneurs lents commandés en mode bang-bang, dans lequel il est avantageusement introduit des non-linéarités dans la stratégie de commande pour ne pas solliciter le moteur électrique de façon abusive.

Plus précisément, selon un premier aspect, l'invention concerne un dispositif d'ajustement d'au moins une variable de fonctionnement d'un moteur en fonction d'une consigne, ce dispositif comprenant :

- des moyens de calcul d'une erreur obtenue à partir de la différence entre une mesure de la variable et la consigne ;
- une unité de génération, à partir de l'erreur, d'une commande de type bang-bang à appliquer à un actionneur lent ;
- une unité d'inhibition, placée en amont de l'unité de génération de commande, apte à inhiber l'erreur lorsqu'elle est comprise dans une plage déterminée ;
- une unité de quantification de la durée de la commande ; et
- une unité d'envoi de la commande à l'actionneur.

L'invention vise aussi un moteur comprenant :

- au moins un actionneur lent ; et
- un dispositif d'ajustement tel que mentionné ci-dessus, apte à générer une commande à appliquer à cet ou ces actionneurs.

L'invention vise aussi un procédé d'ajustement d'au moins une variable de fonctionnement d'un moteur en fonction d'une consigne, ce procédé comportant :

- une étape de calcul d'une erreur obtenue à partir de la différence entre une mesure de la variable et la consigne ;
- une étape d'inhibition de l'erreur lorsqu'elle est comprise dans une plage déterminée ;
- une étape de génération, à partir de l'erreur, d'une commande de type bang-bang à appliquer à un actionneur lent ;
- une étape de quantification de la durée de la commande ; et
- une étape d'envoi de la commande audit actionneur.

De façon très avantageuse, le module d'inhibition du dispositif selon l'invention (respectivement l'étape d'inhibition du procédé selon l'invention) évite de faire osciller inutilement l'actionneur lent au voisinage du point de fonctionnement désiré.

Dans un mode préféré de réalisation de l'invention, la plage précitée, autrement appelée "zone morte" peut être définie, constituant ainsi un paramètre de réglage du moteur.

Avantageusement, l'unité de quantification de durée permet de découper les durées d'impulsion selon la cadence maximale du bus ou selon un multiple de cette cadence.

Dans un mode particulier de mis en oeuvre de l'invention, le dispositif d'ajustement comporte en outre la quantification de l'amplitude de ladite commande.

Grâce à cette troisième non-linéarité, on ne commande le moteur qu'au-delà d'un seuil minimum d'ordre, ceci afin d'éviter des commandes répétées lors de variations trop faibles de l'amplitude de la commande.

Le pas de quantification en amplitude est, dans un mode de réalisation de l'invention, un paramètre de réglage du moteur.

Dans une variante de mise en oeuvre de l'invention, chaque actionneur comporte une électronique apte à traiter la commande reçue du dispositif d'ajustement.

En variante préférée, le dispositif selon l'invention envoie la commande à l'actionneur sous forme d'une trame, cette trame étant découpée de façon cyclique en une pluralité de champs, chaque champ étant associé à un contrôle possible de l'actionneur et comportant une valeur binaire pour effectuer ou non ce contrôle.

Dans cette variante de mise en oeuvre de l'invention, l'actionneur est connecté au dispositif d'ajustement par un bus via une interface, cette interface comportant :

- un port adressable par le dispositif d'ajustement ;
- des moyens pour recevoir par le port, la trame numérique comportant la commande, la trame étant découpée de façon cyclique en une pluralité de champs, chaque champ comportant une valeur binaire ; et
- des moyens pour traiter indépendamment chacun des champs et envoyer ou non, en fonction de la valeur binaire comprise dans le champ, un signal de commande à l'actionneur lent.

Cette variante préférée de mise en oeuvre permet avantageusement de ne pas développer d'électronique embarquée pour asservir les actionneurs.

Dans un mode particulier de réalisation, les différentes étapes du procédé d'ajustement sont déterminées par des instructions de programmes d'ordinateurs.

En conséquence, l'invention vise aussi un programme d'ordinateur sur un support d'informations, ce programme étant susceptible d'être mis en oeuvre dans un dispositif d'ajustement ou plus généralement dans un ordinateur, ce programme comportant des instructions adaptées à la mise en oeuvre des étapes d'un procédé d'ajustement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente de façon schématique un dispositif d'ajustement conforme à l'invention dans un premier mode particulier de réalisation ;
- la figure 2 représente une trame pouvant être utilisée dans l'invention ;
- les figures 3 à 7 illustrent, sous forme de chronogramme, le fonctionnement du dispositif d'ajustement de la figure 1 ;
- la figure 8 représente un moteur de fusée conforme à l'invention ; et
- la figure 9 représente le dispositif d'ajustement conforme à l'invention compris dans le moteur de la figure 8.

Description détaillée d'un mode de réalisation

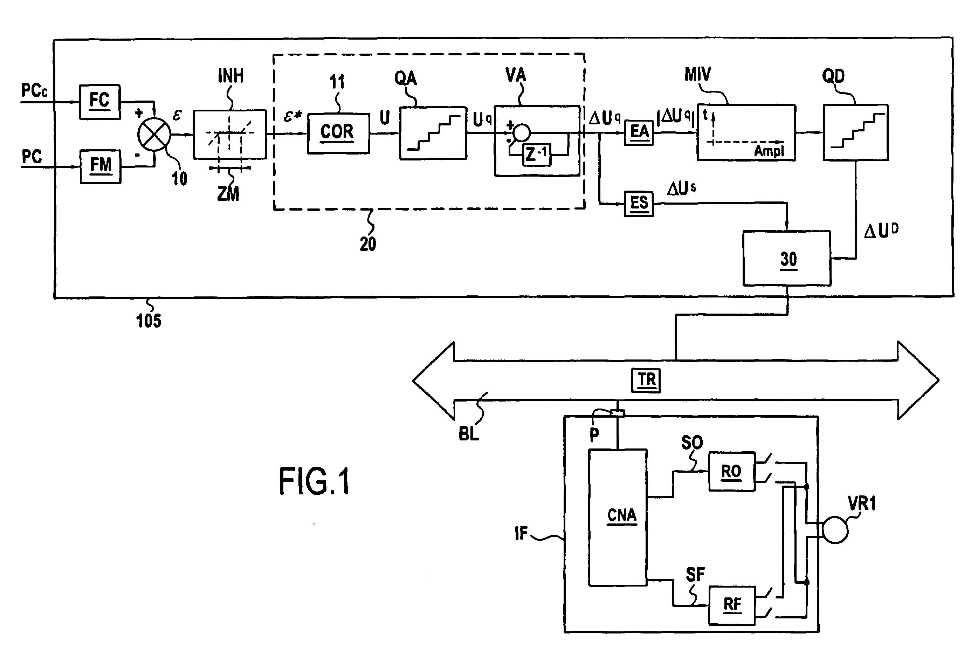

La figure 1 représente un dispositif 105 pour ajuster une variable de fonctionnement PC en fonction d'une consigne $PC_c$. Ce dispositif 105 est connecté via un bus BL, à un actionneur lent VR1.

Conformément à l'invention, l'actionneur lent VR1 est contrôlé en mode bang-bang.

Dans l'exemple de réalisation décrit ici, l'actionneur lent est commandé par des créneaux d'alimentation, cas particulier d'une commande bang-bang. L'actionneur lent peut donc recevoir un certain nombre de commandes discrètes.

Dans le mode de réalisation décrit ici, on considérera que l'actionneur peut recevoir deux types de commandes respectivement pour effectuer une rotation dans un sens ou dans l'autre.

La commande de l'actionneur sera donc constituée par le sens de rotation de l'actionneur et la durée de cette rotation. Les créneaux d'alimentation seront donc être de durée variable et alternés en fonction du sens de rotation.

Dans le mode de réalisation décrit ici, l'actionneur VR1 est connecté au bus BL par une interface IF, cette interface IF comportant notamment un port P adressable par le dispositif d'ajustement 105.

Une mesure de la variable PC et de la consigne

$PC_c$ sont fournies en entrée du dispositif d'ajustement 105.

Dans l'exemple de réalisation décrit ici, la mesure PC et la consigne $PC_c$ sont respectivement filtrées par un filtre de mesure FM et par un filtre de consigne FC.

La sortie de chacun de ces filtres est fournie en entrée d'un soustracteur 10 apte à calculer une erreur ε par différence entre la mesure PC de la variable et la consigne $PC_c$.

Conformément à l'invention, le dispositif 105 d'ajustement comporte un module d'inhibition INH apte à inhiber (ou annuler) l'erreur ε en sortie du soustracteur 10 lorsque celle-ci est dans une plage déterminée appelée zone morte ZM.

Dans le mode de réalisation décrit ici, cette zone morte ZM est un paramètre du réglage du dispositif 105.

La sortie ε* de l'unité d'inhibition INH est fournie en entrée d'un correcteur 11 apte à générer une commande U.

Le correcteur 11 ne fait pas partie de l'invention à proprement parler. On peut par exemple utiliser un simple intégrateur.

Dans le mode de réalisation décrit ici, la commande U en sortie du correcteur 11 est quantifiée en amplitude par une unité QA de quantification. La commande quantifiée $U^q$ est fournie en entrée d'un différentiateur VA apte à calculer la variation $\Delta U^q$ d'amplitude à chaque cycle de calcul.

Au sens du brevet, on dira que l'association du correcteur 11 du quantificateur QA et du différentiateur VA constitue une unité 20 de génération placée en aval de l'inhibiteur INH.

Dans le mode de réalisation décrit ici, la variation d'amplitude $\Delta U^q$ est fournie en entrée :

- d'un extracteur d'amplitude EA apte à calculer le module $|\Delta U^q|$ de la variation d'amplitude ; et
- d'un module ES apte à calculer le signe $\Delta U^S$ de cette variation d'amplitude.

Le module $|\Delta Uq|$ de la variation d'amplitude est fourni en entrée d'un module MIV apte à déterminer la durée $\Delta U^D$ de commande de l'actionneur VR1 en fonction de l'amplitude $|\Delta Uq|$.

Cette durée est quantifiée par un quantificateur de durée QD.

Dans le mode de réalisation décrit ici, la commande de l'actionneur est donc constituée :

- d'une part par la durée $\Delta U^D$ de commande des relais ; et
- d'autre part par un signe $\Delta U^S$ représentatif du sens de rotation souhaité.

Dans l'exemple de réalisation décrit ici, le dispositif d'ajustement 105 selon l'invention comporte des moyens 30 pour envoyer à l'actionneur lent VR1 le signe

$\Delta U^S$ représentatif du sens de rotation de l'actionneur et la durée $\Delta U^D$ représentant la durée de commande des relais.

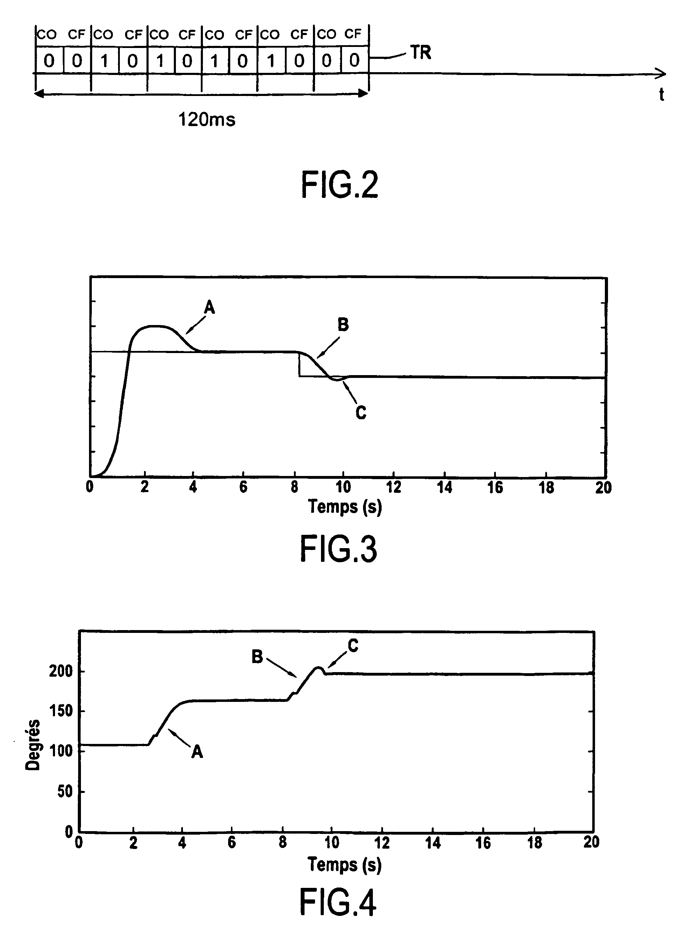

La figure 2 représente une trame TR utilisée dans un mode de réalisation de l'invention.

Cette trame TR a, dans l'exemple de réalisation décrit ici, une durée de 120 ms. Elle est décomposée en douze champs CO,CF répartis cycliquement dans la trame TR, chacun de ces champs ayant une durée de résolution ou de période minimale de 10 ms, cette durée correspondant à la cadence maximale du bus ou à un multiple de cette cadence.

Chacun des champs CO, CF de la trame TR est associé à un contrôle de l'actionneur à savoir dans l'exemple décrit ici, pour faire tourner l'actionneur dans un sens ou dans l'autre pendant 10 ms.

Dans l'exemple de réalisation décrit ici, l'interface IF placée entre l'actionneur VR1 et le bus BL comporte, derrière le port P, un convertisseur numérique analogique CNA susceptible de générer un signal SO ou SF dirigé vers un relais RO ou RF pour faire tourner l'actionneur VR1 dans un sens ou dans l'autre.

Plus précisément, dans l'exemple décrit ici, lorsque le champ CO (respectivement CF) comporte la valeur binaire 1, le convertisseur numérique analogue CNA génère le signal SO (respectivement SF) vers le relais RO (respectivement RF) pour faire tourner l'actionner dans le sens correspondant.

Ainsi, la trame TR de la figure 2 doit être interprétée comme suit :

- aucun signal envoyé au relais RO ;
- signal SF de 80 ms envoyé au relais RF entre les instants 20 et 100 ms.

En référence aux figures 3 à 7, nous allons maintenant décrire un exemple d'ajustement de la variable PC en fonction de la consigne $PC_c$.

A la figure 3, nous avons représenté en traits fins l'évolution de la consigne $PC_c$ et en traits forts l'évolution de la mesure de la variable PC.

Dans cet exemple, la consigne a une première valeur pendant 8 s, puis à une deuxième valeur, inférieure à la première valeur, entre la 8$^{ème}$ et la **20$^{ème}$** seconde.

On remarquera que la variable PC croît à partir de l'instant 0 jusqu'à dépasser la valeur de la consigne $PC_c$, puis (zone A) décroît entre les instants 2 et 4s pour rejoindre la consigne, décroît à nouveau (zone B) à partir de l'instant 8s jusqu'à atteindre une valeur inférieure à la consigne $PC_c$ et remonte (zone C) légèrement pour rejoindre la consigne $PC_c$.

Cette évolution de la mesure de la variable PC s'explique par le contrôle de l'actionneur VR1 représenté à la figure 4.

Sur cette figure, on a représenté le degré d'ouverture de l'actionneur VR1 en fonction du temps.

On voit, de façon cohérente avec la figure 3, que l'angle est constant pendant environ 2 s, puis augmente (zone A) pour faire diminuer la valeur de la variable PC afin de rejoindre la consigne la première fois, augmente à nouveau (zone B) pour faire diminuer la variable PC après la 8$^{ème}$ seconde, puis diminue légèrement (zone C) pour faire remonter la valeur de la variable PC afin de rejoindre la consigne PC$_c$.

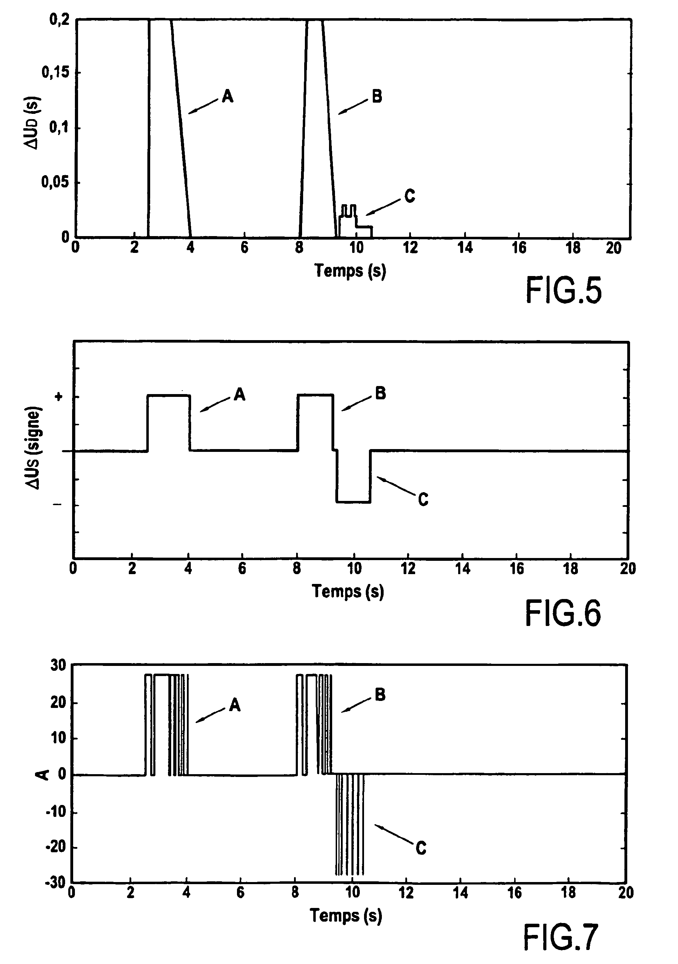

Les figures 5 et 6 représentent respectivement la durée $\Delta U_D$ et le signe $\Delta U_S$ (sens de rotation) de contrôle de l'actionneur VR1.

Aussi, les zones A et B sur chacune des figures, représentent respectivement le contrôle en rotation de l'actionneur VR1 selon un premier sens, et les zones C le contrôle de l'actionneur VR1 en rotation dans l'autre sens pendant une durée courte ayant pour objet de compenser un dépassement probable de la manoeuvre B.

La figure 7 représente l'intensité dans le moteur de l'actionneur VR1. Dans l'exemple de réalisation décrit ici, ce moteur est alimenté en courant continu.

Cette figure fait apparaître, de façon très avantageuse, l'intérêt de l'invention, le module d'inhibition INH, et les deux quantificateurs QA et QD permettant de ne solliciter le moteur que pour le strict nécessaire du contrôle de la vanne VR1, sans appel inutile de courant au voisinage du point de fonctionnement désiré.

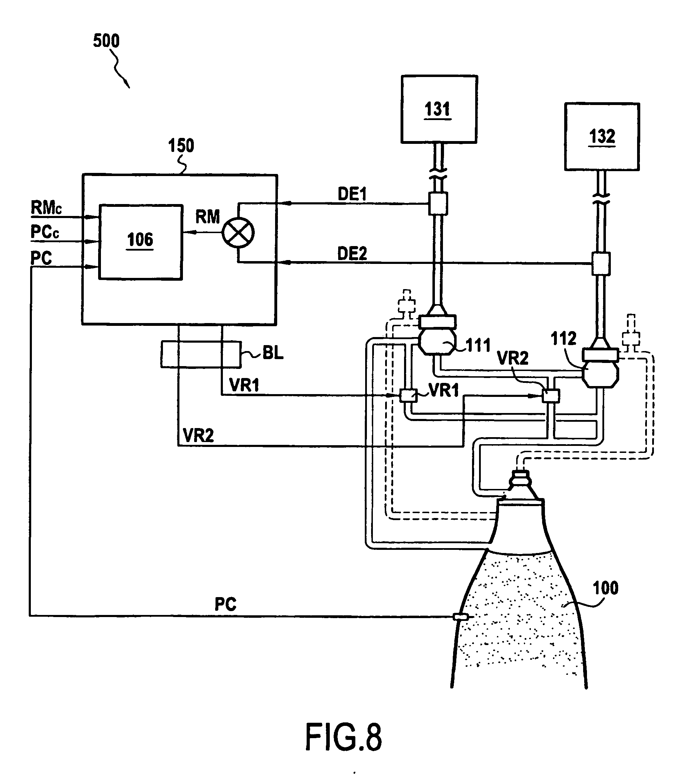

En référence à la figure 8, nous allons maintenant décrire un moteur de fusée 500 conforme à l'invention.

L'invention s'applique ici dans un contexte multivariable comme il va maintenant être décrit.

Le moteur 500 conforme à l'invention comporte, dans cet exemple, deux réservoirs d'ergols référencés 131 et 132, chacun en amont d'une pompe 111, 112. Le débit de chacun des ergols peut être régulé par des vannes lentes VR1, VR2.

Dans l'exemple de la figure 1, le dispositif d'ajustement 105 selon l'invention avait été décrit dans un contexte monovariable (ajustement de la valeur PC en fonction de la consigne PC$_c$).

Dans le mode de réalisation décrit ici, le moteur 500 comporte un dispositif conforme à l'invention 106 pour ajuster deux variables à savoir une pression PC dans la chambre de combustion 100 et un rapport massique RM des deux ergols en entrée de la chambre de combustion 100.

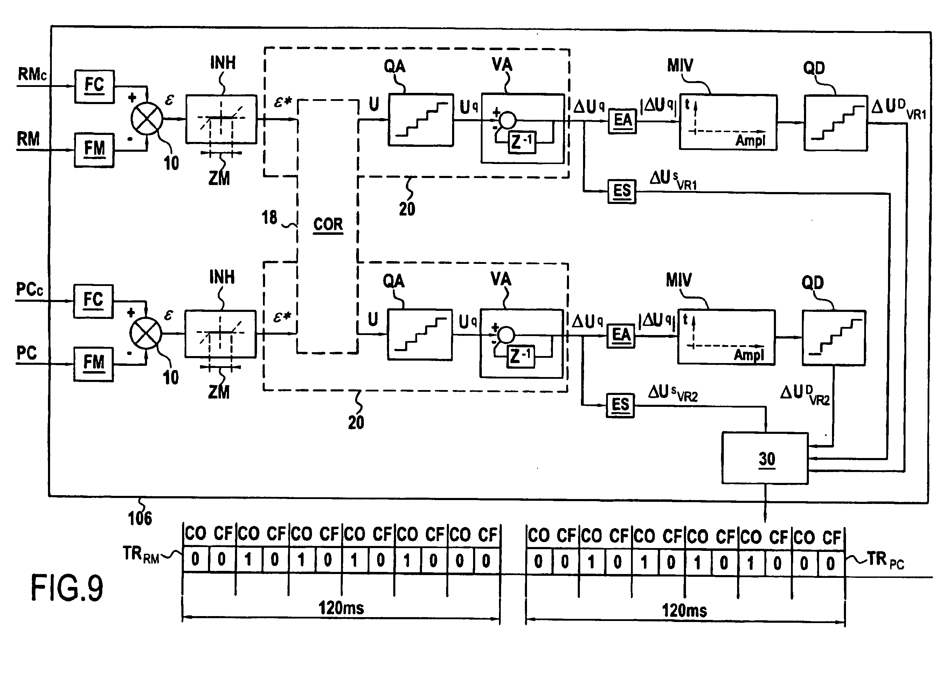

Le dispositif 106 est représenté à la figure 9. Il se déduit directement du dispositif 105 de la figure 1 et ne sera pas décrit en détails. L'homme du métier comprendra que ce dispositif génère deux trames TR$_{RM}$ et TR$_{PC}$ adressées respectivement aux vannes VR1, VR2, chacune de ces trames comportant une commande pour effectuer une rotation de la vanne concernée pendant une durée $\Delta U_{VR1}^{D}$, $\Delta U_{VR2}^{D}$, selon us us un sens $\Delta U_{VR1}^{US}$, $\Delta U_{VR2}^{US}$.

En conséquence, dans cet exemple, le dispositif 106 reçoit deux consignes en entrée à savoir une consigne PC$_c$ en pression dans la chambre de combustion 100 et une consigne RM$_c$ en rapport de débit massique des deux ergols en entrée de la chambre de combustion 100.

Le dispositif 106 ajuste ainsi la valeur des paramètres régulés à savoir la pression PC dans la chambre de combustion 100 et le rapport RM entre les débits DE1 et DE2 en amont des pompes 111, 112, sans sollicitation inutile du moteur 500 à l'aide d'un correcteur multivariable 18 ou de deux correcteurs indépendants monovariables 11.

Dans l'exemple décrit précédemment, le moteur est alimenté en courant continu.

Bien entendu, l'invention s'applique aussi à des moteurs alimentés en courant alternatif. L'interface IF placée entre l'actionneur VR1 et le bus BL doit dans ce cas être modifiée en fonction de la source d'énergie du moteur, comme de façon connue par un homme du métier.

## Revendications

1. Dispositif d'ajustement (105) d'au moins une variable de fonctionnement d'un moteur en fonction d'une consigne (PC$_c$), ce dispositif comportant :

   - des moyens (10) de calcul d'une erreur ($\epsilon$) obtenue à partir de la différence entre une mesure (PC) de ladite variable et ladite consigne (PC$_c$);
   - une unité (20) de génération, à partir de ladite erreur ($\epsilon$), d'une commande ($\Delta U^q$) à appliquer à un actionneur (VR1); et
   - une unité (30) d'envoi de ladite commande audit actionneur (VR1) ; ledit dispositif étant **caractérisé en ce que** :
   - ledit actionneur est un actionneur lent et ladite commande ($\Delta U^q$) est de type bang-bang ; et **en ce qu'**il comporte :
   - une unité d'inhibition (INH), placée en amont de ladite unité (20) de génération de commande, apte à inhiber ladite erreur ($\epsilon$) lorsqu'elle est comprise dans une plage déterminée (ZM) ; et
   - une unité (QD) de quantification de la durée ($\Delta U^d$) de ladite commande.

2. Dispositif d'ajustement (105) selon la revendication 1, ce dispositif comportant en outre une unité (QA) de quantification de l'amplitude de ladite commande.

3. Dispositif d'ajustement (105) selon la revendication 1 ou 2, ce dispositif comportant des moyens de définition de ladite plage (ZM).

4. Dispositif d'ajustement (105) selon l'une quelconque des revendications 1 à 3, apte à envoyer ladite commande ($\Delta U^q$) sous forme d'une trame (TR) adressée à un port dudit actionneur lent (VR1), et dans lequel ladite trame (TR) est découpée de façon cyclique en une pluralité de champs (CO, CF), chaque champ, associé à un contrôle possible dudit actionneur (VR1), comportant une valeur binaire pour effectuer ou non ledit contrôle.

5. Moteur (500) comprenant :

   - au moins un actionneur lent (VR1, VR2) ; et
   - un dispositif d'ajustement (105) selon la revendication 1 ou 2 apte à générer au moins une commande ($\Delta U^q$) à appliquer audit au moins un actionneur (VR1, VR2).

6. Moteur (500) selon la revendication 5, dans lequel :

   - ledit au moins actionneur est connecté audit dispositif d'ajustement (105) par un bus (BL) via une interface (IF), cette interface comportant :
   - un port (P) adressable par ledit dispositif d'ajustement (105) ;
   - des moyens pour recevoir par ledit port (P), une trame numérique (TR) comportant ladite commande ($\Delta U^q$), ladite trame (TR) étant découpée de façon cyclique en une pluralité de champs (CO, CF), chaque champ comportant une valeur binaire ; et
   - des moyens (RO, RF) pour traiter indépendamment chacun desdits champs et envoyer ou non, en fonction de la valeur binaire comprise dans le champ, un signal de commande audit actionneur lent.

7. Procédé d'ajustement d'au moins une variable de fonctionnement d'un moteur en fonction d'une consigne (C), ce procédé comportant :

   - une étape (10) de calcul d'une erreur ($\epsilon$) obtenue à partir de la différence entre une mesure (V) de ladite variable et ladite consigne (C);
   - une étape (20) de génération, à partir de ladite erreur ($\epsilon$), d'une commande ($\Delta U^q$) à appliquer à un actionneur ; et
   - une étape d'envoi de ladite commande audit actionneur (VR1, VR2) ; ledit procédé étant **caractérisé en ce que** :
   - ledit actionneur (VR1, VR2) est un actionneur lent et ladite commande ($\Delta U^q$) est de type bang-bang ; et **en ce qu'**il comporte :
   - avant ladite étape de génération, une étape d'inhibition de ladite erreur ($\epsilon$) lorsqu'elle est comprise dans une plage déterminée (ZM) ; et
   - avant ladite étape d'envoi, une étape de quantification de la durée ($\Delta U^d$) de ladite commande.

8. Programme d'ordinateur comportant des instructions pour l'exécution des étapes du procédé d'ajustement selon la revendication 7 lorsque ledit programme est exécuté par un ordinateur.

9. Support d'enregistrement lisible par un ordinateur (105) sur lequel est enregistré un programme d'ordinateur comprenant des instructions pour l'exécution des étapes du procédé d'ajustement selon la revendication 7.

## Claims

1. An adjustment device (105) for adjusting at least one operating variable of an engine as a function of a setpoint ($PC_c$), the device comprising:

   • calculation means (10) for calculating an error ($\epsilon$) obtained from the difference between a measurement (PC) of said variable and said setpoint ($PC_c$);
   • a command generator unit (20) for responding to said error ($\epsilon$) to generate a command ($\Delta U^q$) for application to an actuator (VR1); and
   • a sender unit (30) for sending said command to said actuator (VR1);

   wherein:

   • said actuator is a slow actuator and said command ($\Delta U^q$) is of the bang-bang type; and wherein it includes:
   • an inhibit unit (INH) placed upstream from said command generator unit (20) suitable for inhibiting said error ($\epsilon$) when it lies within a determined range (ZM); and
   • a quantizing unit (QD) for quantizing the duration ($\Delta U^d$) of said command.

2. An adjustment device (105) according to claim 1, the device further including a quantizing unit (QA) for quantizing the amplitude of said command.

3. An adjustment device (105) according to claim 1 or 2, the device including means for defining said range (ZM).

4. An adjustment device (105) according to anyone of claims 1 to 3, suitable for sending said command ($\Delta U^q$) in the form of a frame (TR) addressed to a port of said slow actuator (VR1), and wherein said frame (TR) is subdivided cyclically into a plurality of fields (CO, CF), each field being associated with a respective possible operation of said actuator (VR1), and including a binary value for performing or not performing said operation.

5. An engine (500) including:

   • at least one slow actuator (VR1, VR2); and

• an adjustment device (105) according to claim 1 or 2, suitable for generating at least one command ($\Delta U^q$) for application to said at least one actuator (VR1,VR2).

**6.** An engine (500) according to claim 5, wherein:

said at least one actuator is connected to said adjustment device (105) by a bus (BL) via an interface (IF), said interface comprising:

a port (P) addressable by said adjustment device (105) ; means for receiving via said port (P) a digital frame (TR) including said command ($\Delta U^q$), said frame (TR) being subdivided cyclically into a plurality of fields (CO,CF), each field having a binary value; and

• means (RO, RF) for processing each of said fields independently and for sending or not sending a control signal to said slow actuator as a function of the binary value contained in the field.

**7.** A method of adjusting at least one operating variable of an engine as a function of a setpoint (C), the method comprising:

• a calculation step (10) of calculating an error ($\varepsilon$) obtained from the difference between a measurement (V) of said variable and said setpoint (C);
• a generation step (20) of responding to said error ($\varepsilon$) by generating a command ($\Delta U^q$) for application to an actuator; and
• a sending step of sending said command to said actuator (VR1, VR2);

wherein:

• said actuator (VR1, VR2) is a slow actuator and said command ($\Delta U^q$) is of the bang-bang type; and wherein it includes:
• before said generation step, a step of inhibiting said error ($\varepsilon$) when it lies within a predetermined range (ZM); and
before said sending step, a step of quantizing the duration ($\Delta U^d$) of said command.

**8.** A computer program including instructions for executing steps of an adjustment method according to claim 7 when said program is executed by a computer.

**9.** A recording medium readable by a computer (105) on which there is recorded a computer program including instructions for executing the steps of the adjustment method according to claim 7.

**Patentansprüche**

**1.** Vorrichtung zur Einstellung (105) wenigstens einer Betriebsvariablen eines Triebwerks in Abhängigkeit eines Sollwertes (PC$_C$), wobei diese Vorrichtung umfaßt:

- Mittel (10) zum Berechnen eines Fehlers ($\varepsilon$), der anhand der Differenz zwischen einer Messung (PC) der Variablen und dem Sollwert (PC$_C$) erhalten wird,
- eine Einheit (20) zum Generieren - unter Zugrundelegung des Fehlers ($\varepsilon$) - eines auf einen Aktor (VR1) anzuwendenden Befehls ($\Delta U^q$), und
- eine Einheit (30) zum Senden des Befehls an den Aktor (VR1),

wobei die Vorrichtung **dadurch gekennzeichnet ist, daß**:

- der Aktor ein langsamer Aktor ist und der Befehl ($\Delta U^q$) vom Typ Bang-Bang ist, und daß sie umfaßt:
- eine der Einheit (20) zum Generieren eines Befehls vorgeordnete Inhibitionseinheit (INH), die geeignet ist, den Fehler ($\varepsilon$) zu verhindern, wenn er in einem bestimmten Bereich (ZM) liegt, und
- eine Einheit (QD) zur Quantisierung der Dauer ($\Delta U^d$) des Befehls.

**2.** Einstellungsvorrichtung (105) nach Anspruch 1, wobei diese Vorrichtung ferner eine Einheit (QA) zur Quantisierung der Amplitude des Befehls umfaßt.

**3.** Einstellungsvorrichtung (105) nach Anspruch 1 oder 2, wobei diese Vorrichtung Mittel zum Definieren des Bereiches (ZM) umfaßt.

**4.** Einstellungsvorrichtung (105) nach einem der Ansprüche 1 bis 3, die geeignet ist, den Befehl ($\Delta U^q$) in Form eines Rasters (TR), das an einen Port des langsamen Aktors (VR1) adressiert ist, zu senden, und wobei das Raster (TR) zyklisch in eine Vielzahl von Feldern (CO, CF) aufgeteilt ist, wobei jedes Feld, das einer möglichen Steuerung des Aktors (VR1) zugeordnet ist, einen binären Wert aufweist, um die Steuerung durchzuführen oder nicht.

**5.** Triebwerk (500), umfassend:

- wenigstens einen langsamen Aktor (VR1, VR2) und
- eine Einstellungsvorrichtung (105) nach Anspruch 1 oder 2, die geeignet ist, wenigstens einen auf den wenigstens einen Aktor (VR1, VR2) anzuwendenden Befehl ($\Delta U^q$) zu generie-

**EP 2 187 031 B1**

ren.

6. Triebwerk (500) nach Anspruch 5, wobei:

    - der wenigstens eine Aktor durch einen Bus (BL) über eine Schnittstelle (IF) an die Einstellungsvorrichtung (105) angeschlossen ist, wobei diese Schnittstelle umfaßt:
    - einen über die Einstellungsvorrichtung (105) adressierbaren Port (P),
    - Mittel zum Empfangen - über den Port (P) - eines den Befehl ($\Delta U^q$) umfassenden digitalen Rasters (TR), wobei das Raster (TR) zyklisch in eine Vielzahl von Feldern (CO, CF) aufgeteilt ist, wobei jedes Feld einen binären Wert aufweist, und
    - Mittel (RO, RF), um ein jedes der Felder unabhängig zu bearbeiten und in Abhängigkeit des in dem Feld enthaltenen binären Wertes an den langsamen Aktor ein Steuersignal zu senden oder nicht.

7. Verfahren zur Einstellung wenigstens einer Betriebsvariablen eines Triebwerks in Abhängigkeit eines Sollwertes (C), wobei dieses Verfahren umfaßt:

    - einen Schritt (10) zum Berechnen eines Fehlers ($\varepsilon$), der anhand der Differenz zwischen einer Messung (V) der Variablen und dem Sollwert (C) erhalten wird,
    - einen Schritt (20) zum Generieren - unter Zugrundelegung des Fehlers ($\varepsilon$) - eines auf einen Aktor anzuwendenden Befehls ($\Delta U^q$), und
    - einen Schritt zum Senden des Befehls an den Aktor (VR1, VR2),

    wobei das Verfahren **dadurch gekennzeichnet ist, daß**:

    - der Aktor (VR1, VR2) ein langsamer Aktor ist und der Befehl ($\Delta U^q$) vom Typ Bang-Bang ist,

    und daß es umfaßt:

    - vor dem Schritt des Generierens einen Schritt zum Verhindern des Fehlers ($\varepsilon$), wenn er in einem bestimmten Bereich (ZM) liegt, und
    - vor dem Schritt des Sendens einen Schritt zur Quantisierung der Dauer ($\Delta U^d$ des Befehls.

8. Computerprogramm, umfassend Befehle für die Ausführung der Schritte des Einstellungsverfahrens nach Anspruch 7, wenn das Programm durch einen Rechner ausgeführt wird.

9. Über einen Computer (105) lesbarer Aufzeichnungsträger, auf dem ein Computerprogramm gespeichert ist, das Befehle zum Ausführen der Schritte des Einstellungsverfahrens nach Anspruch 7 umfaßt.

FIG.1

EP 2 187 031 B1

| CO | CF | CO | CF | CO | CF | CO | CF | CO | CF | CO | CF |
|----|----|----|----|----|----|----|----|----|----|----|----|
| 0 | 0 | 1 | 0 | 1 | 0 | 1 | 0 | 1 | 0 | 0 | 0 |

TR

t

120ms

## FIG.2

A

B

C

Temps (s)

## FIG.3

B   C

200

150

Degrés

100

A

50

0

0   2   4   6   8   10   12   14   16   18   20

Temps (s)

## FIG.4

FIG.5

FIG.6

FIG.7

FIG.8

FIG.9

EP 2 187 031 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 4991393 A